# EUROPEAN PATENT SPECIFICATION

(11) **EP 4 019 309 B1**
(45) Date of publication and mention of the grant of the patent: **04.09.2024**
(21) Application number: 21203573.7
(22) Date of filing: 19.10.2021
(51) Int. Cl.: B60K 7/00, B60K 1/04, B62M 6/65

(54) **ELECTRIC WHEEL HUB AND METHOD OF DISASSEMBLING THE SAME**
ELEKTRISCHE RADNABE UND VERFAHREN ZU DEREN DEMONTAGE
MOYEU DE ROUE ÉLECTRIQUE ET SON PROCÉDÉ DE DÉMONTAGE

(30) Priority: 28.12.2020 TW 109146494
(43) Date of publication of application: 29.06.2022
(73) Proprietor: Solid Year Co., Ltd., New Taipei City 221 (TW)
(72) Inventor: HUANG, Herman, Taipei City 116 (TW)
(74) Representative: dompatent von Kreisler Selting Werner - Partnerschaft von Patent- und Rechtsanwälten mbB

(56) References cited:
- TW-A- 201 925 000
- TW-B- I 701 176
- US-A1- 2011 259 658
- US-A1- 2012 083 375
- US-B2- 10 811 647

## Description

### BACKGROUND OF THE INVENTION

### Field of the Invention

The present invention relates to an electric wheel hub and a method of disassembling the same.

### Description of the Prior Art

Bicycles were prevalent in many places. With the changes in lifestyles, the environmental awareness and the concept of physical fitness, bicycles are popularly used in daily lives. With development of technology, electric bicycles have been a booming trend, especially in cities. The electric bicycles can be roughly classified into types with hub motor and mid-mounted motor. The advantages of the type with hub motor are that it is compact and artistic in appearance, that the appearance of the bicycle is concise, that the price is low, that there is relatively lower level of requirement for the bicycle frame, and that there is relatively lower requirement for the chain, so the electric bicycles are popular around the world. TW M580517, TW M580522 and TW 1701176 disclose the like electric bicycles.

However, the above-mentioned wheel hub motor has a complicated structure, many parts and components are interconnected, and it is difficult and time-consuming to dismantle and replace. Therefore, it needs a repairer who knows specific model of the wheel hub motor well to repair and/or replace the parts and components, which is inconvenient.

The present invention is, therefore, arisen to obviate or at least mitigate the above-mentioned disadvantages.

### SUMMARY OF THE INVENTION

The main object of the present invention is to provide an electric wheel hub which can greatly simplify the difficulty of maintenance and/or replacement.

To achieve the above and other objects, an electric wheel hub is provided, including: a shell, including a base and a cover, the base defining an interior space and a mounting entrance, the cover being mounted to the base in a mounting direction and covering the mounting entrance; a motor assembly, including a stator, a rotor and a shaft, the stator and the rotor being received within the shell by moving through the mounting entrance in the mounting direction, the stator and the rotor being relatively rotatable, the rotor being connected with the shell, the shaft being disposed within the shell in a direction opposite to the mounting direction and disposed through and connected with the stator, two ends of the shaft being configured to be respectively connected to two fork arms, the shaft defining an axial direction and a circumferential direction, the shaft and the stator being relatively movable in the axial direction, the shaft and the stator being relatively non-rotatable in the circumferential direction; and a battery unit, electrically connected with the motor assembly, including a cartridge and a plurality of batteries, the plurality of batteries being positionally received within the cartridge, the cartridge being received within the interior space by moving through the mounting entrance in the mounting direction, the cartridge being connected with the stator and disposed around the motor assembly.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

- Fig. 1: is a drawing showing an application of a preferable embodiment of the present invention;
- Fig. 2: is a breakdown drawing of a preferable embodiment of the present invention;
- Fig. 3: is a breakdown drawing of a battery unit and a circuit board according to a preferable embodiment of the present invention;
- Fig. 4: is a breakdown drawing showing a shaft, two end caps and a stator of a preferable embodiment of the present invention;
- Fig. 5: is a drawing showing the shaft and the stator combined according to a preferable embodiment of the present invention;
- Fig. 6: is a drawing showing the shaft and the two end caps combined according to a preferable embodiment of the present invention; and
- Figs. 7-11: are drawings showing detachment of an electric wheel hub of a preferable embodiment of the present invention.

### DETAILED DESCRIPTION OF THE PREFERRED EMBODIMENTS

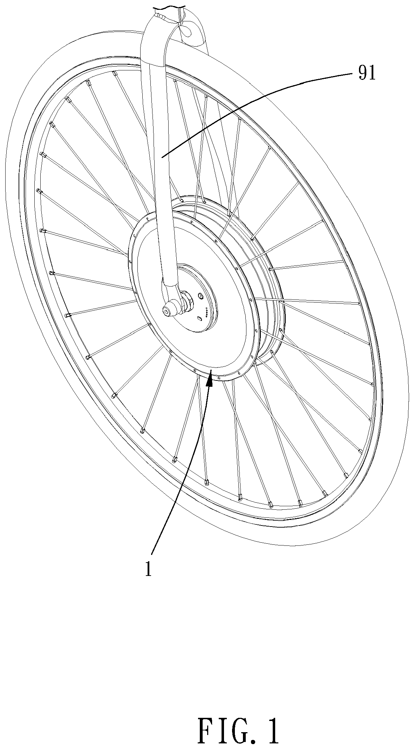

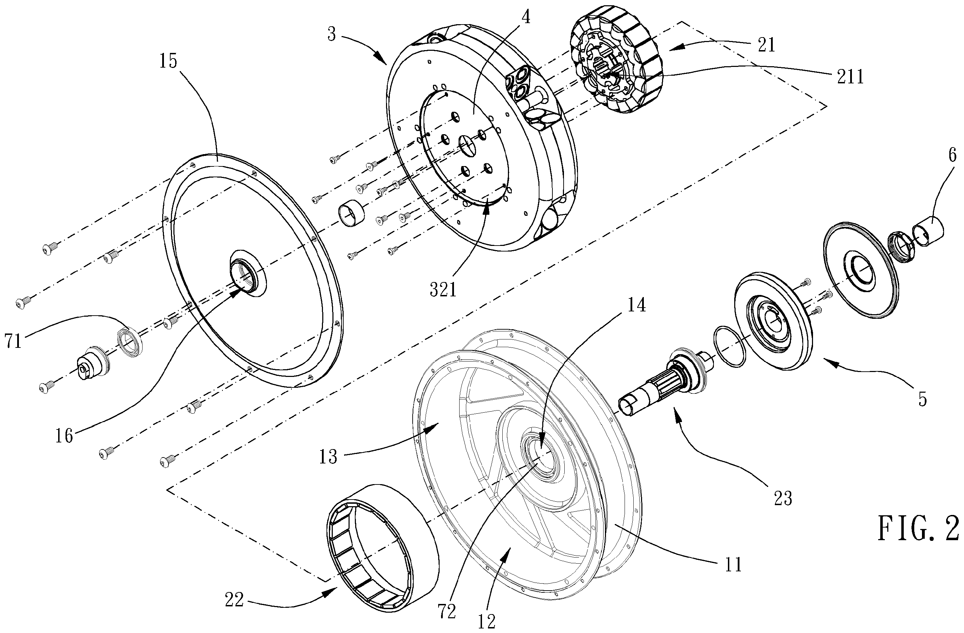

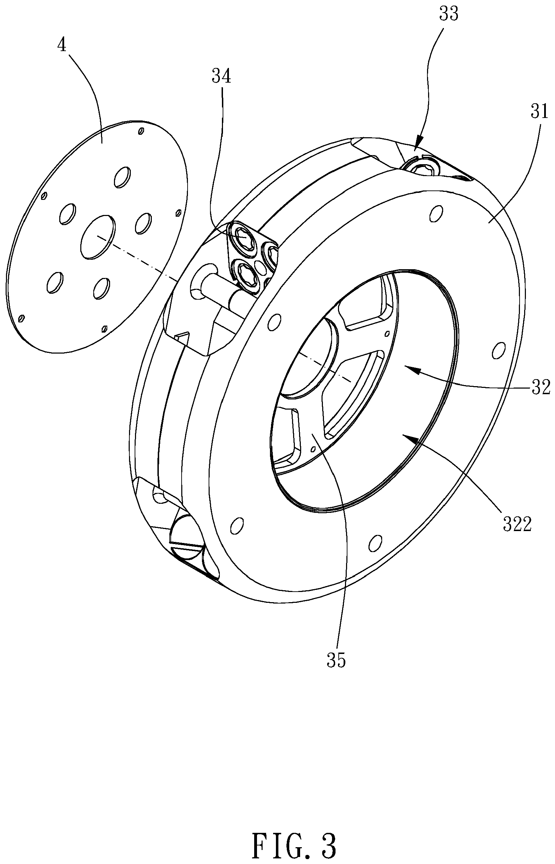

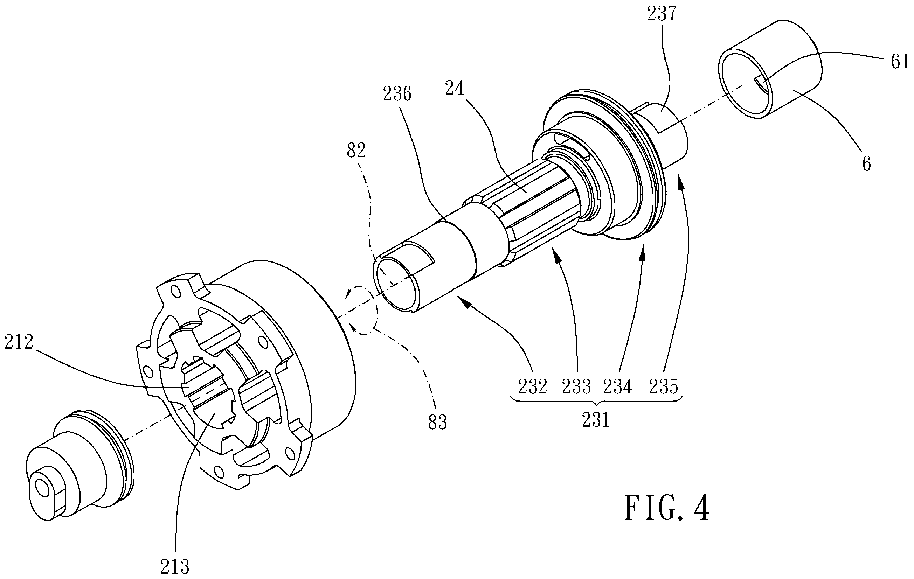

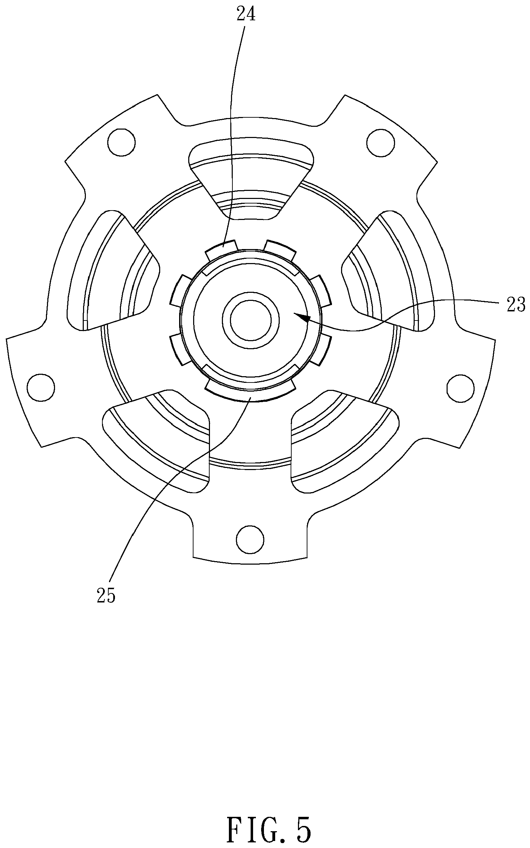

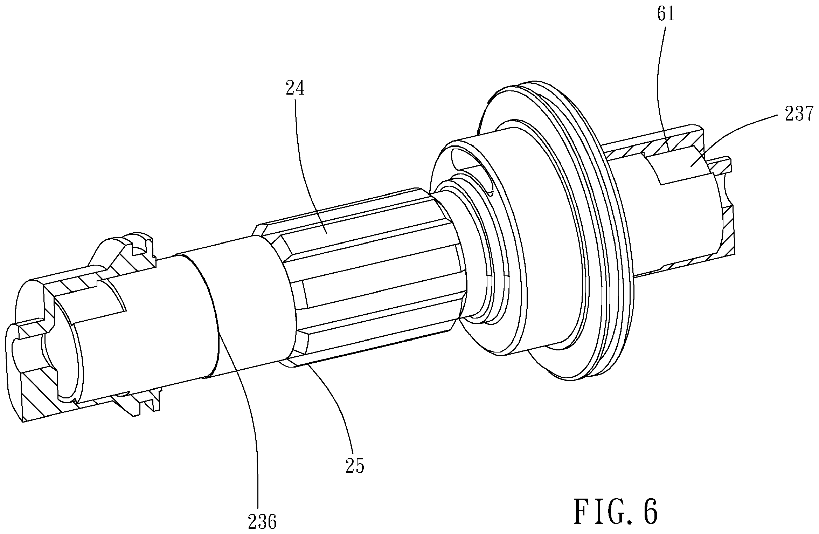

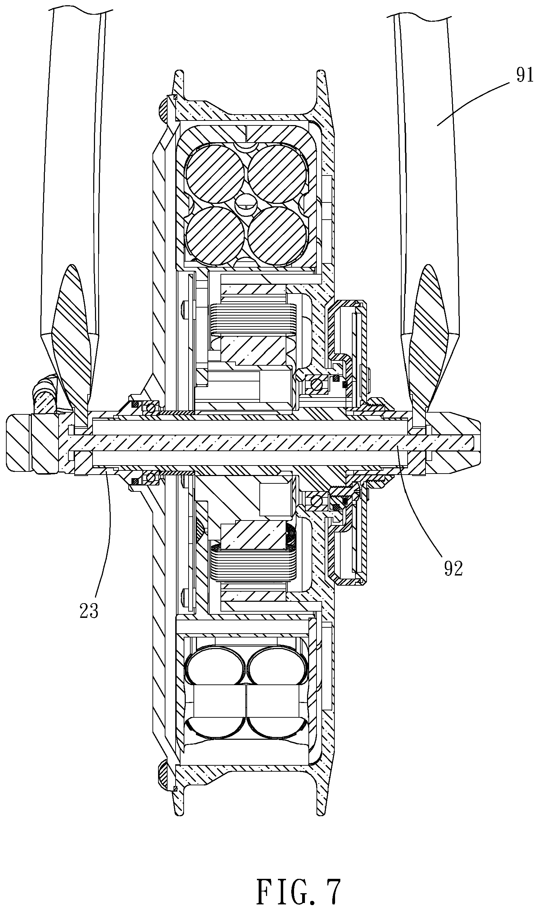

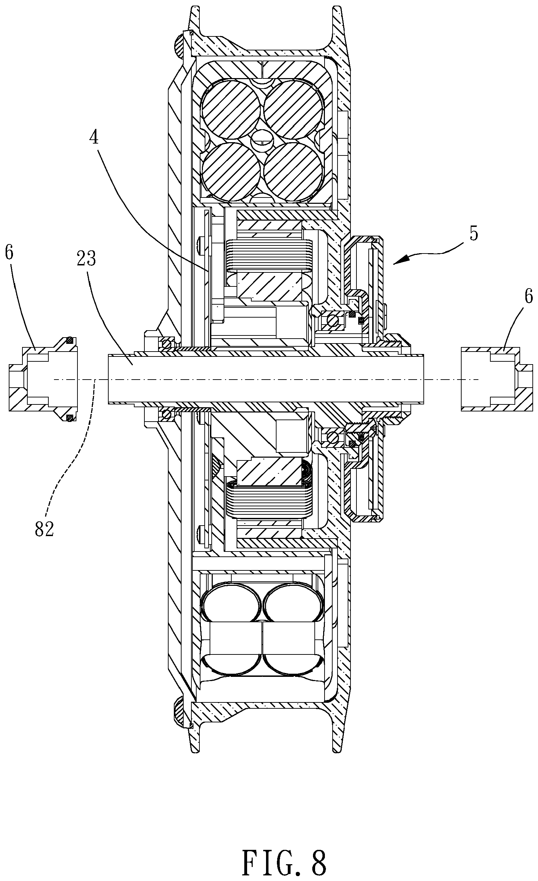

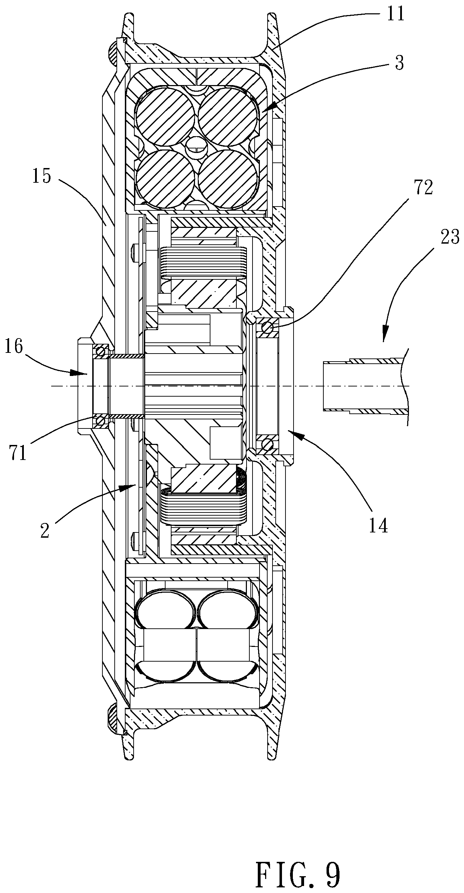

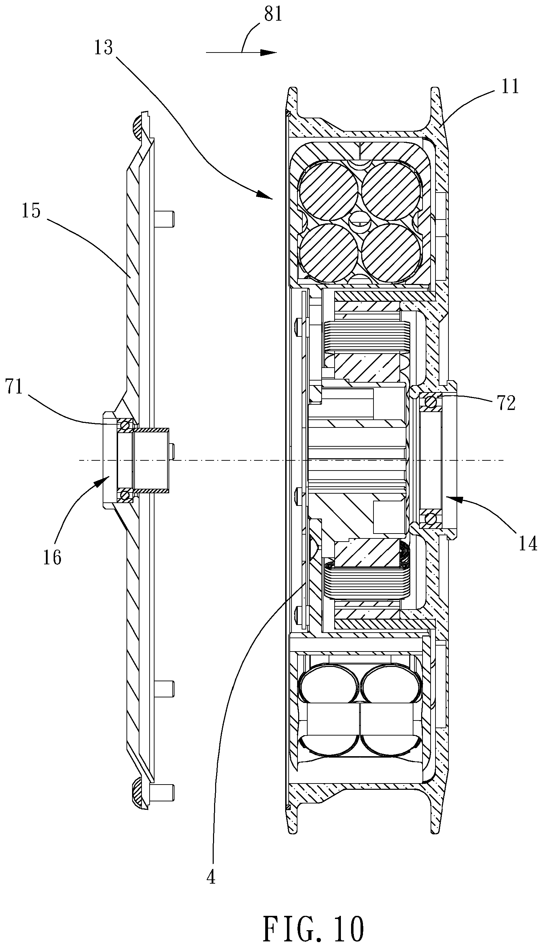

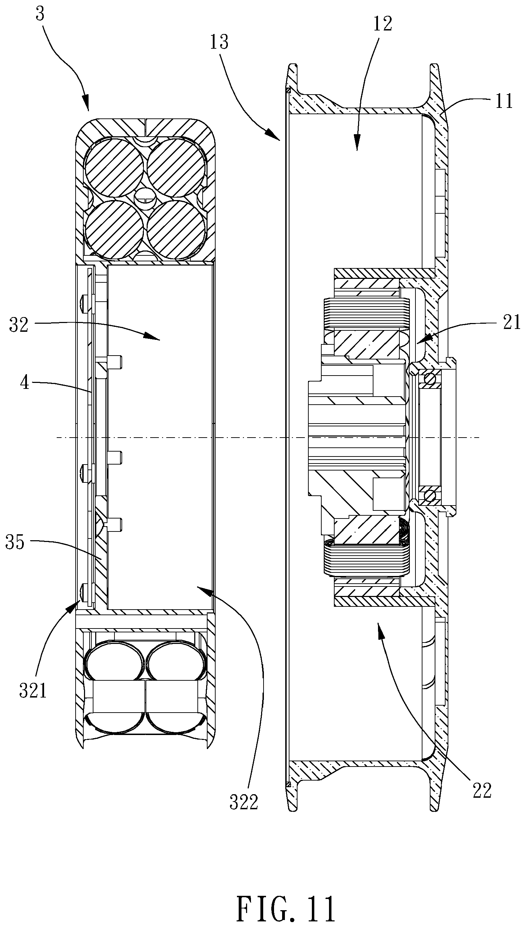

Please refer to Figs. 1 to 11 for a preferable embodiment of the present invention. An electric wheel hub of the present invention includes a shell 1, a motor assembly 2 and a battery unit 3.

The shell 1 includes a base 11 and a cover 15, the base 11 defines an interior space 12 and a mounting entrance 13, and the cover 15 is mounted to the base 11 in a mounting direction 81 and covers the mounting entrance 13. The motor assembly 2 includes a stator 21, a rotor 22 and a shaft 23, the stator 21 and the rotor 22 are received within the shell 1 by moving through the mounting entrance 13 in the mounting direction 81, the stator 21 and the rotor 22 are relatively rotatable, and the rotor 22 is connected with the shell 1. The shaft 23 is disposed within the shell 1 in a direction opposite to the mounting direction 81 and disposed through and connected with the stator 21, and two ends of the shaft 23 is configured to be respectively connected to two fork arms 91. The shaft 23 defines an axial direction 82 and a circumferential direction 83, the shaft 23 and the stator 21 are relatively movable in the axial direction 82, and the shaft 23 and the stator 21 are relatively non-rotatable in the circumferential direction 83. The battery unit 3 is electrically connected with the motor assembly 2, includes a cartridge 31 and a plurality of batteries 34, the plurality of batteries 34 are positionally received within the cartridge 31, the cartridge 31 is received within the interior space 12 by moving through the mounting entrance 13 in the mounting direction 81, and the cartridge 31 is connected with the stator 21 and disposed around the motor assembly 2.

The shaft 23 can be mechanically detached from the stator 21 so that the wheel hub can be quickly detached or installed without dismantling parts in the motor assembly 2, which is easy to uninstall/install and lowers the repairing cost. The battery unit 3 is made to be integral so that it is easy to install and maintain and is stable. In other embodiments, the battery unit 3 may be provided without the cartridge 31. The cartridge 31 is preferably made of plastic material (such as ABS-PC material) which is of good insulation.

The battery unit 3 further includes an attachment portion 35, the cartridge 31 is annular and includes a receiving space 32, the attachment portion 35 is connected with cartridge 31 and extends from a first end 321 of the receiving space 32, the motor assembly 2 is received within the receiving space 32 by moving into the receiving space 32 from a second end 322 of the receiving space 32, the first end 321 is more adjacent to the cover 15 than the second end 322, and the attachment portion 35 is connected with the stator 21. A circuit board 4 is detachably positioned to a side of the attachment portion 35 facing toward the cover 15. As the cover 15 is removed, the circuit board 4 is exposed, so that it is easy to inspect, maintain and/or repair. Preferably, the attachment portion 35 and the circuit board 4 are non-protrusive beyond the receiving space 32 so that an external impact can merely impact the shell 1 but cannot impact the circuit board 4, which is stable and durable.

Preferably, an outer circumferential wall of the cartridge 31 includes a plurality of openings 33 distanced from an inner circumferential wall of the shell 1. The cartridge 31 can be taken out from the plurality of openings 33, which helps to replace the cartridge 31.

Preferably, the plurality of batteries 34 are partially exposed from the plurality of openings. The plurality of batteries 34 can be observed from the plurality of openings 33, which helps to evaluate conditions of the plurality of batteries 34.

The shaft 23 further includes an axle 231 and a plurality of first engaging portions 24, and the plurality of first engaging portions 24 are separately arranged on the axle 231 in the circumferential direction 83. The stator 21 includes a perforation 211 and a plurality of second engaging portions 212, the plurality of second engaging portions 212 are separately arranged around the perforation 211 in the circumferential direction 83, the axle 231 is disposed through the perforation 211, the plurality of first engaging portions 24 and the plurality of second engaging portions 212 are engaged with each other, one of each said first engaging portion 24 and each said second engaging portion 212 is a first groove, and the other of each said first engaging portion 24 and each said second engaging portion 212 is a first rib, so that the shaft 23 can be removed in advance for simplifies the detachment and so that the shaft 23and the stator 21 are not relatively rotatable and can be easily and accurately assembled.

Preferably, the shaft 23 further includes a third engaging portion 25, the stator 21 further includes a fourth engaging portion 213, and the third engaging portion 25 and the fourth engaging portion 213 are engaged with each other. One of the third engaging portion 25 and the fourth engaging portion 213 is a second groove, and the other of the third engaging portion 25 and the fourth engaging portion 213 is a second rib. The second groove is not identical to the first groove, and the second rib is not identical to the first rib, so that the shaft 23 and the stator 21 can be easily and accurately assembled.

The electric wheel hub further includes two end caps 6, the two end caps 6 are detachably disposed respectively around opposing ends of the shaft 23, and the shaft 23 is hollow and configured for a spindle 92 to be disposed therethrough. The shaft 23 which is hollow can lower the weight and increase compatibility for the spindle 92. For example, various types of end caps can be used to receive various types of the spindles (having respective diameters of 9 mm, 12 mm and 15 mm, for example). Specifically, each of the opposing ends of the shaft 23 includes a first positioning portion 237, each of the two end caps 6 includes a second positioning portion 61, and the second positioning portion 61 and the first positioning portion 237 are engaged with each other so as to provide stable and accurate combination of the two end caps 6 and the shaft 23. One of the first positioning portion 237 and the second positioning portion 61 is a projection, and the other of the first positioning portion 237 and the second positioning portion 61 is a recess.

Specifically, the electric wheel hub further includes a first bearing 71 and a second bearing 72. The cover 15 includes a first through hole 16, the base 11 includes a second through hole 14, the first bearing 71 is received in the first through hole 16, the second bearing 72 is received in the second through hole 14, and the shaft 23 is disposed through the first bearing 71 and the second bearing 72 and protrusive out beyond opposing sides of the shell 1. The shaft 23 further includes a first end portion 232, a connection portion 233, a flange 234 and a second end portion 235 in sequence. The first end portion 232 is disposed through the first bearing 71 and the cover 15, the second end portion 235 is disposed through the second bearing 72 and the base 11, the connection portion 233 includes the plurality of first engaging portions 24, and the connection portion 233 is connected with the stator 21. An intersection of the connection portion 233 and the first end portion 232 includes a stepped portion 236, the first bearing 71 is abutted against the cover 15 and the stepped portion 236 in the axial direction 82, and the second bearing 72 is abutted between the base 11 and the flange 234 between so as to improve stability of the first bearing 71 and the second bearing 72.

Since the shaft 23 is detachably connected to the stator 21, the first bearing 71 and the second bearing 72 do not have to be detached as the shaft 23 is removed, which avoids loss of the first bearing 71 and the second bearing 72, and simplifies the detachment process. To replace the first bearing 71 or the second bearing 72, the motor assembly 2 does not have to be detached, which is easy and convenient.

An electronic control unit 5 is positioned to the shaft 23 and located at a side of the base 11 opposite to the cover 15, so that the electronic control unit 5 can be individually replaced without dismantling the shell 1, which is easy and convenient.

A method of disassembling the electric wheel hub is further provided. The method includes following steps.
S1: detaching the shaft 23 along the mounting direction 81 from the shell 1 and the two fork arms 91;
S2: detaching the cover 15 from the base 11 so that the cartridge 31 is exposed from mounting entrance 13, which allows inspection, maintenance and/or repair of the circuit board 4, or allows maintenance, replacement and/or lubrication of the first bearing 71 and a second bearing 72;
S3: detaching the cartridge 31 from the stator 21, wherein the cartridge 31 can be taken out from the interior space 12 via the mounting entrance 13 along the direction opposite to the mounting direction 81, for replacement of the cartridge 31, or for maintenance and/or repair of the stator 21 and/or the rotor 22;

In sum, in the design of the electric wheel hub, the maintenance and/or replacement frequency and difficulty of different components are taken into account, which allows the maintenance and/or replacement to be carried out without dismantling the motor assembly. As a result, it can greatly simplify the difficulty of maintenance and/or replacement.

Although particular embodiments of the invention have been described in detail for purposes of illustration, various modifications and enhancements may be made without departing from the scope of the invention as defined by the appended claims.

## Claims

1. An electric wheel hub, including:
a shell (1), including a base (11) and a cover, the base (11) defining an interior space (12) and a mounting entrance (13), the cover being mounted to the base (11) in a mounting direction (81) and covering the mounting entrance (13);
a motor assembly (2), including a stator (21), a rotor (22) and a shaft (23), the stator (21) and the rotor (22) being received within the shell (1) by moving through the mounting entrance (13) in the mounting direction (81), the stator (21) and the rotor (22) being relatively rotatable, the rotor (22) being connected with the shell (1), the shaft (23) being disposed within the shell (1) in a direction opposite to the mounting direction (81) and disposed through and connected with the stator (21), two ends of the shaft (23) being configured to be respectively connected to two fork arms (91), the shaft (23) defining an axial direction (82) and a circumferential direction (83), the shaft (23) and the stator (21) being relatively movable in the axial direction (82), the shaft (23) and the stator (21) being relatively non-rotatable in the circumferential direction (83); and
a battery unit (3), electrically connected with the motor assembly (2), including a cartridge (31) and a plurality of batteries (34), the plurality of batteries (34) being positionally received within the cartridge (31), the cartridge (31) being received within the interior space (12) by moving through the mounting entrance (13) in the mounting direction (81), the cartridge (31) being connected with the stator (21) and disposed around the motor assembly (2)
**characterized in that**:
the battery unit (3) further includes an attachment portion (35), the cartridge (31) is annular and includes a receiving space (32), the attachment portion (35) is connected with cartridge (31) and extends from a first end (321) of the receiving space (32), the motor assembly (2) is received within the receiving space (32) by moving into the receiving space (32) from a second end (322) of the receiving space (32), the first end (321) is more adjacent to the cover (15) than the second end (322), and the attachment portion (35) is connected with the stator (21).

2. The electric wheel hub of claim 1, wherein a circuit board (4) is detachably positioned to a side of the attachment portion (35) facing toward the cover (15).

3. The electric wheel hub of claim 2, wherein the attachment portion (35) and the circuit board (4) are non-protrusive beyond the receiving space (32).

4. The electric wheel hub of claim 1, wherein an outer circumferential wall of the cartridge (31) includes a plurality of openings (33) distanced from an inner circumferential wall of the shell (1).

5. The electric wheel hub of claim 4, wherein the plurality of batteries (34) are partially exposed from the plurality of openings (33).

6. The electric wheel hub of claim 1, further including an electronic control unit (5) which is positioned to the shaft (23) and located at a side of the base (11) opposite to the cover (15).

7. The electric wheel hub of claim 1, wherein the shaft (23) further includes an axle (231) and a plurality of first engaging portions (24), the plurality of first engaging portions (24) are separately arranged on the axle (231) in the circumferential direction (83), the stator (21) includes a perforation (211) and a plurality of second engaging portions (212), the plurality of second engaging portions (212) are separately arranged around the perforation (211) in the circumferential direction (83), the axle (231) is disposed through the perforation (211), the plurality of first engaging portions (24) and the plurality of second engaging portions (212) are engaged with each other, one of each said first engaging portion (24) and each said second engaging portion (212) is a first groove, and the other of each said first engaging portion (24) and each said second engaging portion (212) is a first rib.

8. The electric wheel hub of claim 3, wherein the attachment portion (35) and the circuit board (4) are non-protrusive beyond the receiving space (32); an outer circumferential wall of the cartridge (31) includes a plurality of openings (33) distanced from an inner circumferential wall of the shell (1); an electronic control unit (5) is positioned to the shaft (23) and located at a side of the base (11) opposite to the cover (15); the shaft (23) further includes an axle (231) and a plurality of first engaging portions (24), the plurality of first engaging portions (24) are separately arranged on the axle (231) in the circumferential direction (83), the stator (21) includes a perforation (211) and a plurality of second engaging portions (212), the plurality of second engaging portions (212) are separately arranged around the perforation (211) in the circumferential direction (83), the axle (231) is disposed through the perforation (211), the plurality of first engaging portions (24) and the plurality of second engaging portions (212) are engaged with each other, one of each said first engaging portion (24) and each said second engaging portion (212) is a first groove, and the other of each said first engaging portion (24) and each said second engaging portion (212) is a first rib; the shaft (23) further includes a third engaging portion (25), the stator (21) further includes a fourth engaging portion (213), the third engaging portion (25) and the fourth engaging portion (213) are engaged with each other, one of the third engaging portion (25) and the fourth engaging portion (213) is a second groove, and the other of the third engaging portion (25) and the fourth engaging portion (213) is a second rib; the second groove is not identical to the first groove, and the second rib is not identical to the first rib; the electric wheel hub further includes a first bearing (71) and a second bearing (72), the cover (15) includes a second bearing (72), the base (11) includes a second through hole (72), the first bearing (71) is received in the second bearing (72), the second bearing (72) is received in the second through hole (72), and the shaft (23) is disposed through the first bearing (71) and the second bearing (72) and protrusive out beyond opposing sides of the shell (1); the shaft (23) further includes a first end portion (232), a connection portion (233), a flange (234) and a second end portion (235) connected in sequence; the first end portion (232) is disposed through the first bearing (71) and the cover (15), the second end portion (235) is disposed through the second bearing (72) and the base (11), the connection portion (233) is connected with the stator (21), an intersection of the connection portion (233) and the first end portion (232) includes a stepped portion (236), the first bearing (71) is abutted against the cover (15) and the stepped portion (236) in the axial direction (82), and the second bearing (72) is abutted between the base (11) and the flange (234); the electric wheel hub further includes two end caps (6), the two end caps (6) are detachably disposed around opposing ends of the shaft (23), and the shaft (23) is hollow and configured for a spindle (92) to be disposed therethrough; each of the opposing ends of the shaft (23) includes a first positioning portion (237), each of the two end caps (6) includes a second positioning portion (61), and the second positioning portion (61) and the first positioning portion (237) are engaged with each other; one of the first positioning portion (237) and the second positioning portion (61) is a projection, and the other of the first positioning portion (237) and the second positioning portion (61) is a recess; the cartridge (31) is made of plastic material.

9. A method of disassembling the electric wheel hub of claim 1, including following steps of:
detaching the shaft (23) along the mounting direction (81) from the shell (1);
detaching the cover (15) from the base (11) so that the cartridge (31) is exposed from mounting entrance (13);
detaching the cartridge (31) from the stator (21);
taking out the cartridge (31) from the interior space (12) via the mounting entrance (13) along the direction opposite to the mounting direction (81).

## Patentansprüche

1. Elektrische Radnabe, die aufweist:
eine Verkleidung (1), die eine Basis (11) und eine Abdeckung aufweist, wobei die Basis (11) einen Innenraum (12) und einen Montagezugang (13) definiert, wobei die Abdeckung in einer Montagerichtung (81) an der Basis (11) montiert ist und den Montagezugang (13) bedeckt;
eine Motoranordnung (2), die einen Stator (21), einen Rotor (22) und eine Welle (23) aufweist, wobei der Stator (21) und der Rotor (22) in der Verkleidung (1) aufgenommen werden, indem sie in Montagerichtung (81) durch den Montagezugang (13) bewegt werden, wobei der Stator (21) und der Rotor (22) relativ drehbar sind, wobei der Rotor (22) mit der Verkleidung (1) verbunden ist, wobei die Welle (23) in der Verkleidung (1) in einer Richtung entgegengesetzt zu der Montagerichtung (81) angeordnet ist und durch den Stator (21) hindurch angeordnet und mit diesem verbunden ist, wobei zwei Enden der Welle (23) dazu ausgebildet sind, jeweils mit zwei Gabelzinken (91) verbunden zu sein, wobei die Welle (23) eine axiale Richtung (82) und eine Umfangsrichtung (83) definiert, wobei die Welle (23) und der Stator (21) in der axialen Richtung (82) relativ bewegbar sind, wobei die Welle (23) und der Stator (21) in der Umfangsrichtung (83) nicht relativ drehbar sind; und
eine Batterieeinheit (3), die elektrisch mit der Motoranordnung (2) verbunden ist und eine Kartusche (31) und eine Vielzahl von Batterien (34) aufweist, wobei die Vielzahl von Batterien (34) positionell in der Kartusche (31) aufgenommen sind, wobei die Kartusche (31) im Innenraum (12) aufgenommen wird, indem sie in Montagerichtung (81) durch den Montagezugang (13) bewegt wird, wobei die Kartusche (31) mit dem Stator (21) verbunden ist und um die Motoranordnung (2) herum angeordnet ist,
**dadurch gekennzeichnet, dass**
die Batterieeinheit (3) ferner einen Anbringungsabschnitt (35) aufweist, wobei die Kartusche (31) ringförmig ist und einen Aufnahmeraum (32) aufweist, wobei der Anbringungsabschnitt (35) mit der Kartusche (31) verbunden ist und sich ausgehend von einem ersten Ende (321) des Aufnahmeraums (32) erstreckt, wobei die Motoranordnung (2) in dem Aufnahmeraum (32) aufgenommen wird, indem sie ausgehend von einem zweiten Ende (322) des Aufnahmeraums (32) in den Aufnahmeraum (32) bewegt wird, wobei das erste Ende (321) näher an der Abdeckung (15) liegt als das zweite Ende (322), und wobei der Anbringungsabschnitt (35) mit dem Stator (21) verbunden ist.

2. Elektrische Radnabe nach Anspruch 1, wobei eine Leiterplatte (4) lösbar an einer Seite des Anbringungsabschnitts (35) positioniert ist, die der Abdeckung (15) zugewandt ist.

3. Elektrische Radnabe nach Anspruch 2, wobei der Anbringungsabschnitt (35) und die Leiterplatte (4) nicht über den Aufnahmeraum (32) hinaus ragen.

4. Elektrische Radnabe nach Anspruch 1, wobei eine Außenumfangswand der Kartusche (31) eine Vielzahl von Öffnungen (33) aufweist, die von einer Innenumfangswand der Verkleidung (1) beabstandet sind.

5. Elektrische Radnabe nach Anspruch 4, wobei die Vielzahl von Batterien (34) teilweise durch die Vielzahl von Öffnungen (33) freigelegt sind.

6. Elektrische Radnabe nach Anspruch 1, die ferner eine elektronische Steuereinheit (5) aufweist, die an der Welle (23) positioniert ist und sich an einer Seite der Basis (11) entgegengesetzt zu der Abdeckung (15) befindet.

7. Elektrische Radnabe nach Anspruch 1, wobei die Welle (23) ferner eine Achse (231) und eine Vielzahl von ersten Eingriffsabschnitten (24) aufweist, wobei die Vielzahl von ersten Eingriffsabschnitten (24) getrennt voneinander in Umfangsrichtung (83) an der Achse (231) angeordnet sind, wobei der Stator (21) eine Perforation (211) und eine Vielzahl von zweiten Eingriffsabschnitten (212) aufweist, wobei die Vielzahl von zweiten Eingriffsabschnitten (212) getrennt voneinander in Umfangsrichtung (83) um die Perforation (211) herum angeordnet sind, wobei die Achse (231) durch die Perforation (211) hindurch angeordnet ist, wobei die Vielzahl von ersten Eingriffsabschnitten (24) und die Vielzahl von zweiten Eingriffsabschnitten (212) miteinander in Eingriff sind, wobei jeweils einer der ersten Eingriffsabschnitte (24) und einer der zweiten Eingriffsabschnitte (212) eine erste Nut ist, und wobei der jeweils andere der ersten Eingriffsabschnitte (24) und der zweiten Eingriffsabschnitte (212) eine erste Rippe ist.

8. Elektrische Radnabe nach Anspruch 3, wobei der Anbringungsabschnitt (35) und die Leiterplatte (4) nicht über den Aufnahmeraum (32) hinaus ragen; wobei eine Außenumfangswand der Kartusche (31) eine Vielzahl von Öffnungen (33) aufweist, die von einer Innenumfangswand der Verkleidung (1) beabstandet sind; wobei eine elektronische Steuereinheit (5) an der Welle (23) positioniert ist und sich an einer Seite der Basis (11) entgegengesetzt zu der Abdeckung (15) befindet; wobei die Welle (23) ferner eine Achse (231) und eine Vielzahl von ersten Eingriffsabschnitten (24) aufweist, wobei die Vielzahl von ersten Eingriffsabschnitten (24) getrennt voneinander in Umfangsrichtung (83) an der Achse (231) angeordnet sind, wobei der Stator (21) eine Perforation (211) und eine Vielzahl von zweiten Eingriffsabschnitten (212) aufweist, wobei die Vielzahl von zweiten Eingriffsabschnitten (212) getrennt voneinander in Umfangsrichtung (83) um die Perforation (211) herum angeordnet sind, wobei die Achse (231) durch die Perforation (211) hindurch angeordnet ist, wobei die Vielzahl von ersten Eingriffsabschnitten (24) und die Vielzahl von zweiten Eingriffsabschnitten (212) miteinander in Eingriff sind, wobei jeweils einer der ersten Eingriffsabschnitte (24) und einer der zweiten Eingriffsabschnitte (212) eine erste Nut ist, und der jeweils andere der ersten Eingriffsabschnitte (24) und der zweiten Eingriffsabschnitte (212) eine erste Rippe ist; wobei die Welle (23) ferner einen dritten Eingriffsabschnitt (25) aufweist, wobei der Stator (21) ferner einen vierten Eingriffsabschnitt (213) aufweist, wobei der dritte Eingriffsabschnitt (25) und der vierte Eingriffsabschnitt (213) miteinander in Eingriff sind, wobei einer aus dem dritten Eingriffsabschnitt (25) und dem vierten Eingriffsabschnitt (213) eine zweite Nut ist, und der jeweils andere aus dem dritten Eingriffsabschnitt (25) und dem vierten Eingriffsabschnitt (213) eine zweite Rippe ist; wobei die zweite Nut nicht identisch zu der ersten Nut ist, und wobei die zweite Rippe nicht identisch zu der ersten Rippe ist; wobei die elektrische Radnabe ferner ein erstes Lager (71) und ein zweites Lager (72) aufweist, wobei die Abdeckung (15) ein zweites Lager (72) aufweist, wobei die Basis (11) ein zweites Durchgangsloch (72) aufweist, wobei das erste Lager (71) in dem zweiten Lager (72) aufgenommen ist, wobei das zweite Lager (72) in dem zweiten Durchgangsloch (72) aufgenommen ist, und wobei die Welle (23) durch das erste Lager (71) und das zweite Lager (72) hindurch angeordnet ist und über entgegengesetzte Seiten der Verkleidung (1) hinaus hervorragt; wobei die Verkleidung (23) ferner einen ersten Endabschnitt (232), einen Verbindungsabschnitt (233), einen Flansch (234), und einen zweiten Endabschnitt (235) aufweist, die der Reihe nach verbunden sind; wobei der erste Endabschnitt (232) durch das erste Lager (71) und die Abdeckung (15) hindurch angeordnet ist, wobei der zweite Endabschnitt (235) durch das zweite Lager (72) und die Basis (11) hindurch angeordnet ist, wobei der Verbindungsabschnitt (233) mit dem Stator (21) verbunden ist, wobei eine Schnittstelle des Verbindungsabschnitts (233) und des ersten Endabschnitts (232) einen abgestuften Abschnitt (236) aufweist, wobei das erste Lager (71) in axialer Richtung (82) an der Abdeckung (15) und dem abgestuften Abschnitt (236) anliegt, und wobei das zweite Lager (72) zwischen der Basis (11) und dem Flansch (234) anliegt; wobei die elektrische Radnabe ferner zwei Endkappen (6) aufweist, wobei die beiden Endkappen (6) lösbar um entgegengesetzte Enden der Welle (23) herum angeordnet sind, und wobei die Welle (23) hohl ist und so ausgebildet ist, dass eine Spindel (92) dort hindurch angeordnet wird; wobei jedes der entgegengesetzten Enden der Welle (23) einen ersten Positionierungsabschnitt (237) aufweist, wobei jede der beiden Endkappen (6) einen zweiten Positionierungsabschnitt (61) aufweist, und wobei der zweite Positionierungsabschnitt (61) und der erste Positionierungsabschnitt (237) miteinander in Eingriff sind; wobei einer aus dem ersten Positionierungsabschnitt (237) und dem zweiten Positionierungsabschnitt (61) ein Vorsprung ist, und der jeweils andere aus dem ersten Positionierungsabschnitt (237) und dem zweiten Positionierungsabschnitt (61) eine Aussparung ist; wobei die Kartusche (31) aus einem Kunststoffmaterial besteht.

9. Verfahren zur Demontage der elektrischen Radnabe nach Anspruch 1, das die folgenden Schritte umfasst:
Lösen der Welle (23) entlang der Montagerichtung (81) von der Verkleidung (1);
Lösen der Abdeckung (15) von der Basis (11), so dass die Kartusche (31) durch den Montagezugang (13) freigelegt ist;
Lösen der Kartusche (31) von dem Stator (21);
Entnehmen der Kartusche (31) aus dem Innenraum (12) durch den Montagezugang (13) entlang der Richtung entgegengesetzt zu der Montagerichtung (81).

## Revendications

1. Moyeu de roue électrique, comprenant :
un carter (1), comprenant une base (11) et un couvercle, la base (11) définissant un espace intérieur (12) et une entrée de montage (13), le couvercle étant monté sur la base (11) dans une direction de montage (81) et recouvrant l'entrée de montage (13) ;
un ensemble moteur (2), comprenant un stator (21), un rotor (22) et un arbre (23), le stator (21) et le rotor (22) étant reçus à l'intérieur du carter (1) par déplacement via l'entrée de montage (13) dans la direction de montage (81), le stator (21) et le rotor (22) étant rotatifs de manière relative, le rotor (22) étant relié au carter (1), l'arbre (23) étant disposé à l'intérieur du carter (1) dans une direction opposée à la direction de montage (81) et disposé à travers et relié au stator (21), deux extrémités de l'arbre (23) étant configurées pour être respectivement reliées à deux bras de fourche (91), l'arbre (23) définissant une direction axiale (82) et une direction circonférentielle (83), l'arbre (23) et le stator (21) étant mobiles de manière relative dans la direction axiale (82), l'arbre (23) et le stator (21) étant non rotatifs de manière relative dans la direction circonférentielle (83) ; et
une unité de batterie (3), connectée électriquement à l'ensemble moteur (2), comprenant une cartouche (31) et une pluralité de batteries (34), la pluralité de batteries (34) étant reçue en position à l'intérieur de la cartouche (31), la cartouche (31) étant reçue à l'intérieur de l'espace intérieur (12) par déplacement via l'entrée de montage (13) dans la direction de montage (81), la cartouche (31) étant connectée au stator (21) et disposée autour de l'ensemble moteur (2)
**caractérisé en ce que** :
l'unité de batterie (3) comprend en outre une partie de fixation (35), la cartouche (31) est annulaire et comprend un espace de réception (32), la partie de fixation (35) est connectée à la cartouche (31) et s'étend depuis une première extrémité (321) de l'espace de réception (32), l'ensemble moteur (2) est reçu à l'intérieur de l'espace de réception (32) par déplacement jusque dans l'espace de réception (32) à partir d'une seconde extrémité (322) de l'espace de réception (32), la première extrémité (321) est plus adjacente au couvercle (15) que la seconde extrémité (322), et la partie de fixation (35) est connectée au stator (21).

2. Moyeu de roue électrique de la revendication 1, dans lequel une carte de circuit (4) est positionnée de manière amovible sur un côté de la partie de fixation (35) faisant face au couvercle (15).

3. Moyeu de roue électrique de la revendication 2, dans lequel la partie de fixation (35) et la carte de circuit (4) ne font pas saillie au-delà de l'espace de réception (32).

4. Moyeu de roue électrique de la revendication 1, dans lequel une paroi circonférentielle extérieure de la cartouche (31) comprend une pluralité d'ouvertures (33) espacées d'une paroi circonférentielle intérieure du carter (1).

5. Moyeu de roue électrique de la revendication 4, dans lequel la pluralité de batteries (34) sont partiellement exposées depuis la pluralité d'ouvertures (33).

6. Moyeu de roue électrique de la revendication 1, comprenant en outre une unité de commande électronique (5) qui est positionnée sur l'arbre (23) et située sur un côté de la base (11) opposé au couvercle (15).

7. Moyeu de roue électrique de la revendication 1, dans lequel l'arbre (23) comprend en outre un axe (231) et une pluralité de premières parties de mise en prise (24), la pluralité de premières parties de mise en prise (24) sont agencées séparément sur l'axe (231) dans la direction circonférentielle (83), le stator (21) comprend une perforation (211) et une pluralité de deuxième parties de mise en prise (212), la pluralité de deuxième parties de mise en prise (212) sont agencées séparément autour de la perforation (211) dans la direction circonférentielle (83), l'axe (231) est disposé à travers la perforation (211), la pluralité de premières parties de mise en prise (24) et la pluralité de deuxième parties de mise en prise (212) sont mises en prise les unes avec les autres, l'une de chacune desdites premières parties de mise en prise (24) et de chacune desdites deuxième parties de mise en prise (212) est une première rainure, et l'autre de chacune desdites premières parties de mise en prise (24) et de chacune desdites deuxième parties de mise en prise (212) est une première nervure.

8. Moyeu de roue électrique de la revendication 3, dans lequel la partie de fixation (35) et la carte de circuit (4) ne font pas saillie au-delà de l'espace de réception (32) ; une paroi circonférentielle externe de la cartouche (31) comprend une pluralité d'ouvertures (33) espacées d'une paroi circonférentielle interne du carter (1) ; une unité de commande électronique (5) est positionnée au niveau de l'arbre (23) et située au niveau d'un côté de la base (11) opposé au couvercle (15) ; l'arbre (23) comprend en outre un axe (231) et une pluralité de premières parties de mise en prise (24), la pluralité de premières parties de mise en prise (24) sont agencées séparément sur l'axe (231) dans la direction circonférentielle (83), le stator (21) comprend une perforation (211) et une pluralité de deuxième parties de mise en prise (212), la pluralité de deuxième parties de mise en prise (212) sont agencées séparément autour de la perforation (211) dans la direction circonférentielle (83), l'axe (231) est disposé à travers la perforation (211), la pluralité de premières parties de mise en prise (24) et la pluralité de deuxième parties de mise en prise (212) sont mises en prise les unes avec les autres, l'une de chacune desdites premières parties de mise en prise (24) et de chacune desdites deuxièmes parties de mise en prise (212) est une première rainure, et l'autre de chacune desdites premières parties de mise en prise (24) et de chacune desdites deuxièmes parties de mise en prise (212) est une première nervure ; l'arbre (23) comprend en outre une troisième partie de mise en prise (25), le stator (21) comprend en outre une quatrième partie de mise en prise (213), la troisième partie de mise en prise (25) et la quatrième partie de mise en prise (213) sont mises en prise l'une avec l'autre, l'une de la troisième partie de mise en prise (25) et de la quatrième partie de mise en prise (213) est une seconde rainure, et l'autre de la troisième partie de mise en prise (25) et de la quatrième partie de mise en prise (213) est une seconde nervure ; la seconde rainure n'est pas identique à la première rainure, et la seconde nervure n'est pas identique à la première nervure ; le moyeu de roue électrique comprend en outre un premier palier (71) et un second palier (72), le couvercle (15) comprend un second palier (72), la base (11) comprend un second trou traversant (72), le premier palier (71) est reçu dans le second palier (72), le second palier (72) est reçu dans le second trou traversant (72), et l'arbre (23) est disposé à travers le premier palier (71) et le second palier (72) et fait saillie au-delà des côtés opposés du carter (1) ; l'arbre (23) comprend en outre une première partie d'extrémité (232), une partie de connexion (233), une bride (234) et une seconde partie d'extrémité (235) connectées en séquence ; la première partie d'extrémité (232) est disposée à travers le premier palier (71) et le couvercle (15), la seconde partie d'extrémité (235) est disposée à travers le second palier (72) et la base (11), la partie de connexion (233) est connectée au stator (21), une intersection de la partie de connexion (233) et de la première partie d'extrémité (232) comprend une partie étagée (236), le premier palier (71) est mis en butée contre le couvercle (15) et la partie étagée (236) dans la direction axiale (82), et le second palier (72) est mis en butée entre la base (11) et la bride (234) ; le moyeu de roue électrique comprend en outre deux capuchons d'extrémité (6), les deux capuchons d'extrémité (6) sont disposés de manière amovible autour d'extrémités opposées de l'arbre (23), et l'arbre (23) est creux et configuré pour qu'une broche (92) soit disposée à travers celui-ci ; chacune des extrémités opposées de l'arbre (23) comprend une première partie de positionnement (237), chacun des deux capuchons d'extrémité (6) comprend une seconde partie de positionnement (61), et la seconde partie de positionnement (61) et la première partie de positionnement (237) sont mises en prise l'une avec l'autre ; l'une de la première partie de positionnement (237) et de la seconde partie de positionnement (61) est une saillie, et l'autre de la première partie de positionnement (237) et de la seconde partie de positionnement (61) est un évidement ; la cartouche (31) est réalisée en matière plastique.

9. Procédé de démontage du moyeu de roue électrique de la revendication 1, comprenant les étapes suivantes consistant à :
détacher l'arbre (23) du carter (1) le long de la direction de montage (81) ;
détacher le couvercle (15) de la base (11) de façon à exposer la cartouche (31) depuis l'entrée de montage (13) ;
détacher la cartouche (31) du stator (21) ;
sortir la cartouche (31) de l'espace intérieur (12) via l'entrée de montage (13) le long de la direction opposée à la direction de montage (81).
